# EUROPÄISCHE PATENTSCHRIFT

(11) **EP 2 790 981 B1**
(45) Veröffentlichungstag und Bekanntmachung des Hinweises auf die Patenterteilung: **19.08.2020**
(21) Anmeldenummer: 12809219.4
(22) Anmeldetag: 14.12.2012
(51) Int. Cl.: B60S 1/52, B60S 1/38

(54) **WISCHBLATTVORRICHTUNG**
WIPER BLADE DEVICE
DISPOSITIF DE BALAI D'ESSUIE-GLACE

(30) Priorität: 14.12.2011 DE 102011088462
(43) Veröffentlichungstag der Anmeldung: 22.10.2014
(73) Patentinhaber: Robert Bosch GmbH, 70442 Stuttgart (DE)
(72) Erfinder: WILMS, Christian, B-3582 Beringen-Koersel (BE)
(86) Internationale Anmeldenummer: PCT/EP2012/075575
(87) Internationale Veröffentlichungsnummer: WO 2013/087851

(56) Entgegenhaltungen:
- DE-A1- 19 961 373
- DE-A1-102009 037 683
- US-B1- 6 308 373

## Beschreibung

### Stand der Technik

Die Erfindung geht aus von einer Wischblattvorrichtung nach dem Oberbegriff des Patentanspruchs 1.

Aus der DE 10 2010 002 162 A1 ist eine Wischblattvorrichtung für ein Kraftfahrzeug mit einem Flüssigkeitsleitkörper bekannt, welcher eine Flüssigkeitsleitbrücke aufweist, die dazu vorgesehen ist, eine Flüssigkeitsführung zu optimieren und insbesondere eine Flüssigkeit an einem Wischblattadapter vorbeizuführen. Der Flüssigkeitsleitkörper ist als ein separates Bauteil ausgebildet.

Aus der DE 199 61 373 A1 ist eine Wischblattvorrichtung bekannt, die eine Federleiste und einen Wischblattadapter aufweist. Die Federleiste ist im Bereich des Wischblattadapters zur Befestigung desselben etwas verbreitert.

### Offenbarung der Erfindung

Die Erfindung geht aus von einer Wischblattvorrichtung mit wenigstens einer Federleiste und zumindest einem Flüssigkeitsleitelement.

Es wird vorgeschlagen, dass das Flüssigkeitsleitelement einstückig mit der Federleiste ausgebildet ist und dazu vorgesehen ist, Flüssigkeit am Wischblattadapter (32a) vorbeizuführen. Unter einer "Federleiste" soll in diesem Zusammenhang insbesondere ein Element verstanden werden, das zumindest eine Erstreckung aufweist, die in einem normalen Betriebszustand um zumindest 10 %, insbesondere um wenigstens 20 %, vorzugsweise um mindestens 30 % und besonders vorteilhaft um zumindest 50 % elastisch veränderbar ist, und das insbesondere eine von einer Veränderung der Erstreckung abhängige Gegenkraft erzeugt, die der Veränderung entgegenwirkt. Unter einer "Erstreckung" eines Elements soll in diesem Zusammenhang insbesondere ein maximaler Abstand zweier Punkte einer senkrechten Projektion des Elements auf eine Ebene verstanden werden. Vorzugsweise besteht die Federleiste teilweise, vorzugsweise zumindest zu einem Großteil und besonders vorteilhaft vollständig aus Federstahl. Darunter, dass die Federleiste "zumindest zu einem Großteil" aus Federstahl besteht, soll insbesondere verstanden werden, dass die Federleiste mit einem Massenanteil von zumindest 50 %, insbesondere von wenigstens 70 %, vorzugsweise von mindestens 90 % und besonders vorteilhaft von zumindest 95 % aus Federstahl besteht. Unter einem "Flüssigkeitsleitelement" soll in diesem Zusammenhang insbesondere ein Element verstanden werden, welches dazu vorgesehen ist, eine Flüssigkeit zu leiten, insbesondere in eine Wischblattlängsrichtung und vorzugsweise an einem Wischblattadapter vorbei. Unter "vorgesehen" soll insbesondere speziell ausgelegt und/oder ausgestattet verstanden werden. Unter einer "Wischblattlängsrichtung" soll insbesondere eine Richtung verstanden werden, in der eine Wischleiste eines Wischblatts, die zur direkten Kontaktierung mit einer zu wischenden Oberfläche vorgesehen ist, ihre größte Erstreckung aufweist. Unter einem "Wischblattadapter" soll in diesem Zusammenhang insbesondere ein Adapter verstanden werden, der einen Kontaktbereich zu einem Wischblattbauteil, insbesondere der Federleiste, aufweist, mit dem Wischblattbauteil unverlierbar verbunden ist und dazu vorgesehen ist, einen Kopplungsbereich des Wischblattbauteils für eine Kopplung und/oder Kontaktierung mit einem Wischarm, insbesondere einem Wischarmadapter des Wischarms, bereitzustellen. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden wie beispielsweise durch eine Herstellung aus einem Guss und/oder durch eine Herstellung in einem Ein- oder Mehrkomponentenspritzverfahren und/oder vorteilhaft aus einem einzelnen Rohling. Durch eine entsprechende Ausgestaltung kann eine vorteilhafte Flüssigkeitsführung erreicht werden. Insbesondere können Flüssigkeitsbarrieren vorteilhaft zumindest teilweise überbrückt werden, an denen Flüssigkeit, wie insbesondere Reinigungsflüssigkeit, während eines Betriebs gestaut werden und in unerwünschter Weise über das Wischblatt strömen könnte. Unerwünschte Spritzer auf der zu reinigenden Oberfläche, insbesondere einer Windschutzscheibe, können dadurch zumindest reduziert werden. Ferner kann ein Flüssigkeitsleitelement vorteilhaft kostengünstig bereitgestellt werden. Des Weiteren kann Bauraum eingespart werden, da insbesondere auf spezielle Befestigungselemente verzichtet werden kann. Insbesondere kann eine Bauteileanzahl reduziert werden, wodurch Montagekosten verringert werden können.

Vorteilhaft ist das Flüssigkeitsleitelement an der Federleiste angeformt. Unter "angeformt" soll insbesondere in einem Stück geformt verstanden werden wie beispielsweise durch eine Herstellung aus einem Guss und/oder durch eine Herstellung in einem Ein- oder Mehrkomponentenspritzverfahren und/oder vorteilhaft aus einem einzelnen Rohling. Hierdurch können ein Herstellungsaufwand und damit einhergehend Herstellungskosten reduziert werden. Ferner kann eine Montage vorteilhaft beschleunigt werden.

Ferner wird vorgeschlagen, dass das Flüssigkeitsleitelement, in wenigstens einem montierten Zustand betrachtet, auf einer einer Wischblatthauptströmungsseite abgewandten Seite angeordnet ist. Unter einer "Wischblatthauptströmungsseite" soll insbesondere eine Längsseite des Wischblatts verstanden werden, welche in wenigstens einem montierten Zustand zumindest bei einer Ruhestellung des Wischblatts einer Fahrtwindströmung zugewandt ist. Vorzugsweise befindet sich auf der Wischblatthauptströmungsseite zumindest ein Spoilerelement und insbesondere eine Strömungsfläche eines Spoilerelements, welche dazu vorgesehen ist, die Fahrtwindströmung über das Wischblatt zu leiten und eine Anpresskraft der Wischleiste auf die zu wischende Oberfläche, insbesondere die Windschutzscheibe, zu erhöhen. Unter einer "Ruhestellung" des Wischblatts soll insbesondere eine eindeutig definierte Stellung verstanden werden, in welcher das Wischblatt in einem inaktiven Zustand ruht. Hierdurch kann eine vorteilhafte Flüssigkeitsführung erreicht werden. Ferner kann ein vorteilhaft niedriger Luftwiderstand der Wischblattvorrichtung erzielt werden.

In einer bevorzugten Ausgestaltung der Erfindung wird vorgeschlagen, dass die Federleiste und das Flüssigkeitsleitelement, in Richtung wenigstens einer Normalen einer Hauptfläche der Federleiste betrachtet, zumindest im Wesentlichen eine identische Materialstärke aufweisen. Unter einer "Hauptfläche" eines Elements soll in diesem Zusammenhang insbesondere eine größte glatte Fläche des Elements verstanden werden, welche insbesondere zu einem Großteil und vorzugsweise vollständig durch Kanten des Elements begrenzt ist. Unter einer "Normalen einer Hauptfläche" soll insbesondere eine Gerade verstanden werden, welche auf zumindest einem infinitesimalen Oberflächenelement der Hauptfläche senkrecht steht. Darunter, dass die Federleiste und das Flüssigkeitsleitelement, in eine Richtung betrachtet, "zumindest im Wesentlichen eine identische Materialstärke aufweisen", soll insbesondere verstanden werden, dass in der betrachteten Richtung eine relative Abweichung der Materialstärken höchstens 20 %, insbesondere maximal 10 %, vorzugsweise höchstens 5 % und besonders vorteilhaft maximal 1 % beträgt. Hierdurch kann eine einstückige Herstellung der Federleiste und des Flüssigkeitsleitelements weiter vereinfacht werden. Ferner kann eine einfache Konstruktion erreicht werden. Vorteilhaft verlaufen eine Hauptfläche des Flüssigkeitsleitelements und die Hauptfläche der Federleiste zumindest teilweise parallel zueinander. Vorzugsweise verlaufen die Hauptflächen entlang einer gesamten Längserstreckung des Flüssigkeitsleitelements parallel zueinander. Vorzugsweise grenzen die Hauptfläche der Federleiste und die Hauptfläche des Flüssigkeitsleitelements unmittelbar aneinander und gehen besonders vorteilhaft glatt ineinander über. Darunter, dass die Hauptfläche des Flüssigkeitsleitelements und die Hauptfläche der Federleiste zumindest teilweise parallel zueinander verlaufen, soll insbesondere verstanden werden, dass bei einer senkrechten Projektion auf eine Ebene, welche parallel zu sämtlichen Normalen der Hauptfläche der Federleiste angeordnet ist, wenigstens eine Normale der Hauptfläche des Flüssigkeitsleitelements gleichzeitig eine Normale zumindest einer der Hauptflächen der Federleiste darstellt.

In einer besonders bevorzugten Ausgestaltung der Erfindung wird vorgeschlagen, dass die Federleiste in einem Umgebungsbereich des Flüssigkeitsleitelements wenigstens eine Ausnehmung zu einer Reduzierung einer Biegesteifigkeit aufweist. Vorzugsweise ist der Umgebungsbereich in wenigstens einem montierten Zustand vom Wischblattadapter wenigstens teilweise überdeckt. Unter einer "Ausnehmung" soll in diesem Zusammenhang insbesondere eine Materialausnehmung verstanden werden. Insbesondere kann die Ausnehmung als eine seitliche Randausnehmung ausgebildet sein. Vorzugsweise ist die Ausnehmung jedoch als eine allseitig von einem Rand begrenzte Innenausnehmung ausgebildet. Hierdurch kann einer durch eine Einstückigkeit der Federleiste und des Flüssigkeitsleitelements bedingten Erhöhung einer Biegesteifigkeit des Wischblatts vorteilhaft entgegengewirkt werden.

Wenn das Flüssigkeitsleitelement eine der Federleiste zugewandte erste Erstreckung aufweist, welche größer ist als eine von der Federleiste abgewandte zweite Erstreckung, kann ein besonders vorteilhaftes Strömungsverhalten erzielt werden. Ferner können scharfe Kanten vermieden werden, von welchen eine Verletzungsgefahr ausgehen könnte.

In einer weiteren Ausgestaltung der Erfindung wird vorgeschlagen, dass das Flüssigkeitsleitelement wenigstens eine Ausnehmung zu einer Befestigung eines Wischblattadapters aufweist. Vorzugsweise ist die Ausnehmung als eine Randausnehmung ausgebildet, insbesondere als ein seitlicher Einschnitt. Hierdurch kann vorteilhaft eine Aufnahme für den Wischblattadapter bereitgestellt werden. Insbesondere kann eine vorteilhafte Umströmung des Wischblattadapters ermöglicht werden.

Ferner wird ein Wischblatt mit einer erfindungsgemäßen Wischblattvorrichtung vorgeschlagen. Vorteilhaft umfasst das Wischblatt zumindest einen Wischblattadapter, über welchen sich das Flüssigkeitsleitelement in zumindest eine Wischblattlängsrichtung hinaus erstreckt. Besonders vorteilhaft erstreckt sich das Flüssigkeitsleitelement in beide Wischblattlängsrichtungen über den Wischblattadapter hinaus. Hierdurch kann eine vorteilhafte Flüssigkeitsführung am Wischblattadapter vorbei erreicht werden. Insbesondere kann ein Flüssigkeitsstau im Bereich des Wischblattadapters zumindest reduziert werden.

### Zeichnung

Weitere Vorteile ergeben sich aus der folgenden Zeichnungsbeschreibung. In der Zeichnung sind zwei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen:

- Fig. 1: einen Teil eines Wischblatts mit einer erfindungsgemäßen Wischblattvorrichtung und einem Wischblattadapter in einer isometrischen Darstellung,
- Fig. 2: eine Federleiste der Wischblattvorrichtung aus Fig. 1 in einer Draufsicht,
- Fig. 3: einen Teil des Wischblatts aus Fig. 1 in einer isometrischen Schnittdarstellung,
- Fig. 4: einen Teil eines weiteren Wischblatts mit einer alternativen Wischblattvorrichtung und einem Wischblattadapter in einer isometrischen Darstellung und
- Fig. 5: eine Federleiste der Wischblattvorrichtung aus Fig. 3 in einer Draufsicht.

### Beschreibung der Ausführungsbeispiele

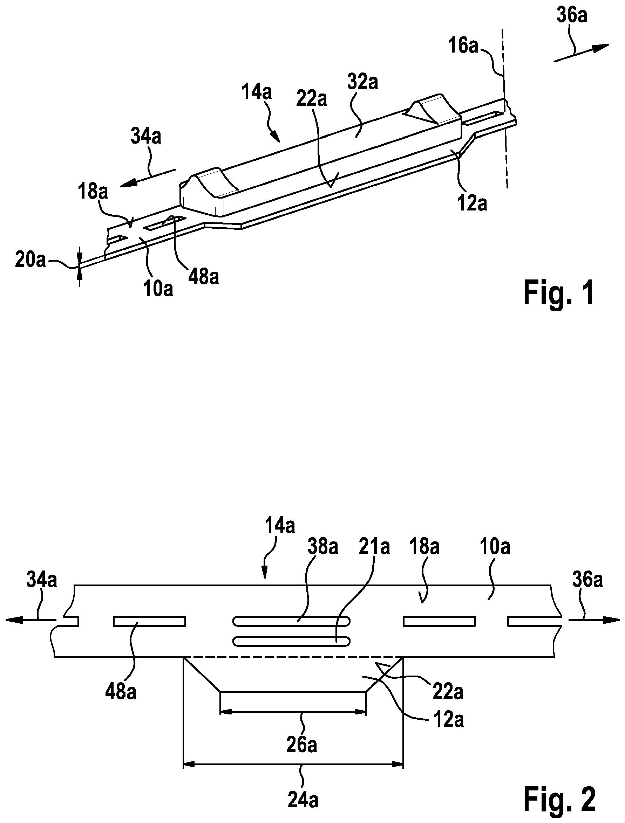

Figur 1 zeigt einen Teil eines Wischblatts mit einer erfindungsgemäßen Wischblattvorrichtung und einem Wischblattadapter 32a, welcher in Figur 1 lediglich vereinfacht dargestellt ist. Der Wischblattadapter 32a ist dazu vorgesehen, das Wischblatt an einem Wischarm eines Kraftfahrzeugs zu befestigen, und weist hierfür spezielle, in Figur 1 nicht dargestellte Kopplungselemente auf. Die Wischblattvorrichtung umfasst eine Federleiste 10a aus Federstahl. Die Federleiste 10a weist im Wesentlichen die Form eines flachen und gebogenen Stabs auf. Der Wischblattadapter 32a ist in einem montierten Zustand an der Federleiste 10a befestigt. Hierbei kommt eine beliebige, dem Fachmann als sinnvoll erscheinende Befestigungsart in Frage. So kann ein Wischblattadapter beispielsweise einstückig mit einer Federleiste verbunden sein. Ferner ist denkbar, dass ein Wischblattadapter an einer Federleiste angeschraubt oder angenietet ist. Im vorliegenden Fall ist der Wischblattadapter 32a über eine Rastverbindung an der Federleiste 10a befestigt. Der Wischblattadapter 32a weist an einer von den Kopplungselementen abgewandten Seite ein Rastelement auf (nicht dargestellt), welches mit einer Rastausnehmung 38a der Federleiste 10a in Eingriff steht (vgl. Figur 2).

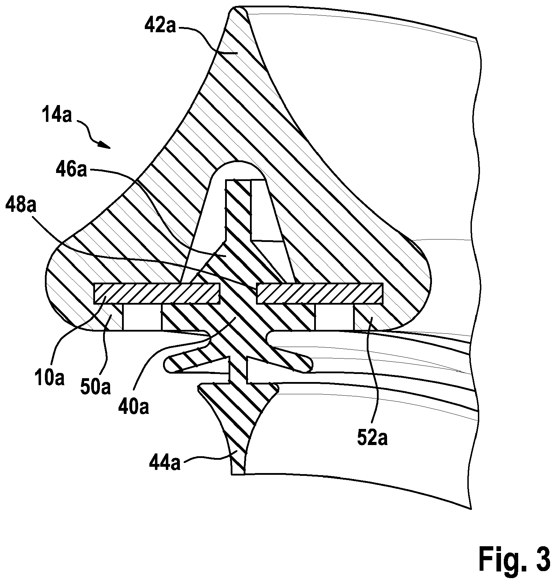

Das Wischblatt umfasst ferner eine Wischleiste 40a und zwei Spoilerelemente 42a (vgl. Figur 3). Die Wischleiste 40a besteht aus einem synthetischen Kautschuk. Die Wischleiste 40a umfasst eine Wischlippe 44a, welche bei einem Wischvorgang über eine Scheibe des Kraftfahrzeugs bewegt wird. Die Wischleiste 40a ist auf einer vom Wischblattadapter 32a abgewandten Seite der Federleiste 10a angeordnet. Die Wischleiste 40a ist an der Federleiste 10a befestigt. Eine Befestigung der Wischleiste 40a an der Federleiste 10a kann dabei auf beliebige, dem Fachmann als sinnvoll erscheinende Weise erfolgen. Im vorliegenden Fall umfasst die Wischleiste 40a an einer von der Wischlippe 44a abgewandten Seite Rastelemente 46a, welche in einem montierten Zustand in korrespondierende Rastausnehmungen 48a der Federleiste 10a eingreifen (vgl. Figur 2). Die Rastausnehmungen 48a sind in Längsrichtung der Federleiste 10a in regelmäßigen Abständen angeordnet und lediglich in einem Bereich unterhalb des Wischblattadapters 32a, in welchem sich die Rastausnehmung 38a zur Befestigung des Wischblattadapters 32a befindet, ausgesetzt. Die zwei Spoilerelemente 42a sind auf beide Enden der Federleiste 10a aufgeschoben, bis sie bündig am Wischblattadapter 32a anliegen. Die Spoilerelemente 42a weisen hierfür jeweils zwei Haltestege 50a, 52a auf, welche die Federleiste 10a in einem montierten Zustand beidseitig umgreifen (vgl. Figur 3).

Die Wischblattvorrichtung weist ein Flüssigkeitsleitelement 12a auf, welches in einem montierten Zustand des Wischblatts am Wischarm auf einer einer Wischblatthauptströmungsseite 14a abgewandten Seite des Wischblatts angeordnet ist. Das Flüssigkeitsleitelement 12a ist dazu vorgesehen, Flüssigkeit am Wischblattadapter 32a vorbeizuführen. Hierzu erstreckt sich das Flüssigkeitsleitelement 12a in beide Wischblattlängsrichtungen 34a, 36a über den Wischblattadapter 32a hinaus. An den Spoilerelementen 42a ist jeweils auf einer der Wischblatthauptströmungsseite 14a abgewandten Seite eine Schlitzung zu einer Aufnahme eines Teils des Flüssigkeitsleitelements 12a vorgesehen (nicht dargestellt).

Das Flüssigkeitsleitelement 12a ist einstückig mit der Federleiste 10a ausgebildet. Das Flüssigkeitsleitelement 12a ist an der Federleiste 10a angeformt (vgl. Figur 2). Die Federleiste 10a und das Flüssigkeitsleitelement 12a wurden zusammen aus einem Federstahlblech gestanzt. Somit weisen die Federleiste 10a und das Flüssigkeitsleitelement 12a, in Richtung wenigstens einer Normalen 16a einer Hauptfläche 18a der Federleiste 10a betrachtet, eine identische Materialstärke 20a auf. Ferner verlaufen eine Hauptfläche 22a des Flüssigkeitsleitelements 12a und die Hauptfläche 18a der Federleiste 10a zumindest teilweise parallel zueinander. Wie anhand von Figur 2 zu erkennen, weist das Flüssigkeitsleitelement 12a eine der Federleiste 10a zugewandte erste Erstreckung 24a auf, welche größer ist als eine von der Federleiste 10a abgewandte zweite Erstreckung 26a. In einer senkrechten Draufsicht in Richtung einer Normalen der Hauptfläche 22a des Flüssigkeitsleitelements 12a weist dieses eine gleichmäßige Trapezform auf. Um einer Erhöhung einer Biegesteifigkeit des Wischblatts durch eine Anformung des Flüssigkeitsleitelements 12a an der Federleiste 10a entgegenzuwirken, weist die Federleiste 10a in einem Umgebungsbereich des Flüssigkeitsleitelements 12a eine Ausnehmung 21a auf. Die Ausnehmung 21a ist als eine Innenausnehmung ausgebildet. Die Ausnehmung 21a ist im montierten Zustand des Wischblatts unter dem Wischblattadapter 32a angeordnet und insbesondere vollständig von diesem überdeckt.

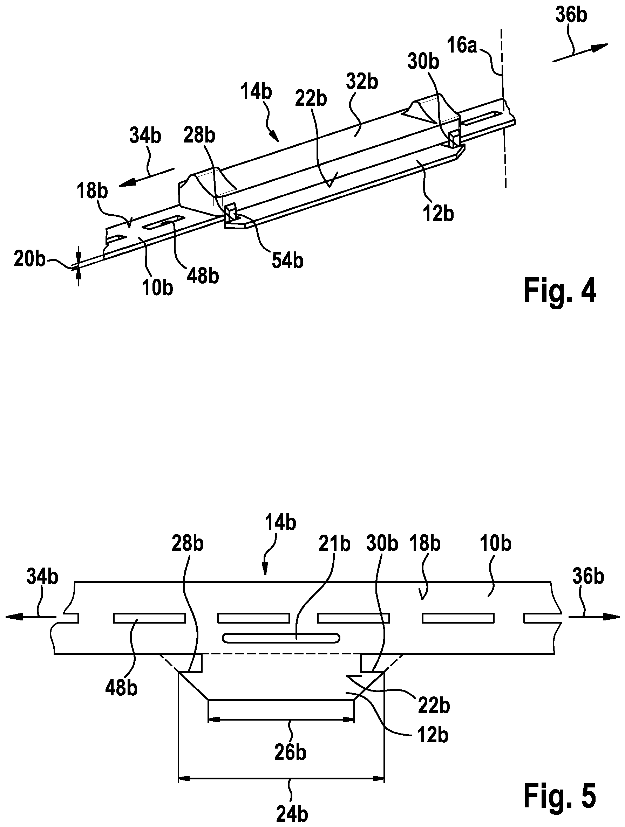

In den Figuren 4 und 5 ist ein weiteres Ausführungsbeispiel der Erfindung gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung des anderen Ausführungsbeispiels, insbesondere der Figuren 1 bis 3, verwiesen werden kann. Zur Unterscheidung der Ausführungsbeispiele ist der Buchstabe a in den Bezugszeichen des Ausführungsbeispiels in den Figuren 1 bis 3 durch den Buchstaben b in den Bezugszeichen des Ausführungsbeispiels der Figuren 4 und 5 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des Ausführungsbeispiels der Figuren 1 bis 3 verwiesen werden.

Figur 4 zeigt einen Teil eines weiteren Wischblatts mit einer alternativen Wischblattvorrichtung und einem Wischblattadapter 32b, welcher in Figur 4 lediglich vereinfacht dargestellt ist. Eine Federleiste 10b der Wischblattvorrichtung weist in einer Längsrichtung regelmäßig angeordnete Rastausnehmungen 48b auf, in welche in einem montierten Zustand Rastelemente 46b einer Wischleiste 40b eingreifen. Hier ist im Gegensatz zum vorherigen Ausführungsbeispiel keine Unterbrechung in einem Bereich des Wischblattadapters 32b vorgesehen. Dieser ist durch Rasthaken 54b an der Federleiste 10b gehalten. Der Wischblattadapter 32b weist vier Rasthaken 54b auf. Die Rasthaken 54b sind in Eckbereichen des Wischblattadapters 32b angeordnet. Die Rasthaken 54b sind am Wischblattadapter 32b angeformt. Die Rasthaken 54b umgreifen die Federleiste 10b im montierten Zustand teilweise und erzeugen dadurch einen Formschluss. Eine der Federleiste 10b zugewandte Unterseite des Wischblattadapters 32b weist eine Materialausnehmung zu einer Aufnahme der Rastelemente 46b auf, welche sich im montierten Zustand im Bereich des Wischblattadapters 32b befinden.

Figur 5 zeigt eine Draufsicht auf die Wischblattvorrichtung. Die Wischblattvorrichtung umfasst ein Flüssigkeitsleitelement 12b, welches ebenfalls zusammen mit der Federleiste 10b aus einem Federstahlblech gestanzt wurde. Das Flüssigkeitsleitelement 12b weist in einer senkrechten Draufsicht in Richtung einer Normalen einer Hauptfläche 22b des Flüssigkeitsleitelements 12b, von Ausnehmungen 28b, 30b abgesehen, eine gleichmäßige Trapezform auf. Die Ausnehmungen 28b, 30b sind an Ecken der längsten Seite des Trapezes angeordnet. Bei den Ausnehmungen 28b, 30b handelt es sich um Randausnehmungen. Die Ausnehmungen 28b, 30b sind dazu vorgesehen, im montierten Zustand einen Durchgriff der Rasthaken 54b des Wischblattadapters 32b auf eine Unterseite der Federleiste 10b zu gestatten. Beim vorliegenden Ausführungsbeispiel kann auf eine Schlitzung von Spoilerelementen 42b verzichtet werden.

Die vorliegende Erfindung kann auch bei Wischblättern mit zwei parallelen Federschienen zum Einsatz kommen, wobei ein Flüssigkeitsleitelement dann nur an der Federleiste angeformt ist, welche auf einer einer Wischblatthauptströmungsseite abgewandten Seite angeordnet ist.

Alternativ kann auch auf eine Ausnehmung in einer Federleiste zu einer Reduzierung einer Biegesteifigkeit verzichtet werden. Alternativ wäre beispielsweise denkbar, eine Materialstärke einer Federleiste in einem Umgebungsbereich eines Flüssigkeitsleitelements zu reduzieren, insbesondere stetig zu reduzieren.

In alternativen Ausgestaltungen kann zusätzlich vorgesehen sein, ein Flüssigkeitsleitelement mit einer Beschichtung zu versehen, insbesondere einer hydrophilen Beschichtung.

## Patentansprüche

1. Wischblattvorrichtung mit wenigstens einer Federleiste (10a; 10b), einem Wischblattadapter (32a) und zumindest einem Flüssigkeitsleitelement (12a; 12b), **dadurch gekennzeichnet, dass** das Flüssigkeitsleitelement (12a; 12b) einstückig mit der Federleiste (10a; 10b) ausgebildet ist und dazu vorgesehen ist, Flüssigkeit am Wischblattadapter (32a) vorbeizuführen.

2. Wischblattvorrichtung nach Anspruch 1, **dadurch gekennzeichnet, dass** das Flüssigkeitsleitelement (12a; 12b) an der Federleiste (10a; 10b) angeformt ist.

3. Wischblattvorrichtung nach Anspruch 1 oder 2, **dadurch gekennzeichnet, dass** das Flüssigkeitsleitelement (12a; 12b), in wenigstens einem montierten Zustand betrachtet, auf einer einer Wischblatthauptströmungsseite (14a; 14b) abgewandten Seite angeordnet ist.

4. Wischblattvorrichtung nach einem der vorhergehenden Ansprüche, **dadurch gekennzeichnet, dass** die Federleiste (10a; 10b) und das Flüssigkeitsleitelement (12a; 12b), in Richtung wenigstens einer Normalen (16a; 16b) einer Hauptfläche (18a; 18b) der Federleiste (10a; 10b) betrachtet, zumindest im Wesentlichen eine identische Materialstärke (20a; 20b) aufweisen.

5. Wischblattvorrichtung nach einem der vorhergehenden Ansprüche, **dadurch gekennzeichnet, dass** die Federleiste (10a; 10b) in einem Umgebungsbereich des Flüssigkeitsleitelements (12a; 12b) wenigstens eine Ausnehmung (21a; 21b) zu einer Reduzierung einer Biegesteifigkeit aufweist.

6. Wischblattvorrichtung nach einem der vorhergehenden Ansprüche, **dadurch gekennzeichnet, dass** das Flüssigkeitsleitelement (12a; 12b) eine der Federleiste (10a; 10b) zugewandte erste Erstreckung (24a; 24b) aufweist, welche größer ist als eine von der Federleiste (10a; 10b) abgewandte zweite Erstreckung (26a; 26b).

7. Wischblattvorrichtung nach einem der vorhergehenden Ansprüche, **dadurch gekennzeichnet, dass** das Flüssigkeitsleitelement (12b) wenigstens eine Ausnehmung (28b, 30b) zu einer Befestigung eines Wischblattadapters (32b) aufweist.

8. Wischblatt mit einer Wischblattvorrichtung nach einem der vorhergehenden Ansprüche.

9. Wischblatt nach Anspruch 8, **gekennzeichnet durch** zumindest einen Wischblattadapter (32a; 32b), über welchen sich das Flüssigkeitsleitelement (12a; 12b) in zumindest eine Wischblattlängsrichtung (34a, 36a; 34b, 36b) hinaus erstreckt.

## Claims

1. Wiper blade device with at least one spring strip (10a; 10b), a wiper blade adapter (32a) and at least one liquid-conducting element (12a; 12b), **characterized in that** the liquid-conducting element (12a; 12b) is formed integrally with the spring strip (10a; 10b) and is provided to guide liquid past the wiper blade adapter (32a) .

2. Wiper blade device according to Claim 1, **characterized in that** the liquid-conducting element (12a; 12b) is integrally formed on the spring strip (10a; 10b).

3. Wiper blade device according to Claim 1 or 2, **characterized in that** the liquid-conducting element (12a; 12b), is viewed in at least one mounted state, is arranged on a side facing away from a wiper-blade main-flow side (14a; 14b).

4. Wiper blade device according to one of the preceding claims, **characterized in that** the spring strip (10a; 10b) and the liquid-conducting element (12a; 12b), as viewed in the direction of at least one perpendicular (16a; 16b) of a main surface (18a; 18b) of the spring strip (10a; 10b), at least substantially have an identical material thickness (20a; 20b).

5. Wiper blade device according to one of the preceding claims, **characterized in that** the spring strip (10a; 10b) in a surrounding region of the liquid-conducting element (12a; 12b) has at least one recess (21a; 21b) for reducing a flexural rigidity.

6. Wiper blade device according to one of the preceding claims, **characterized in that** the liquid-conducting element (12a; 12b) has a first extent (24; 24b) which faces the spring strip (10a; 10b) and is greater than a second extent (26a; 26b) which faces away from the spring strip (10; 10b).

7. Wiper blade device according to one of the preceding claims, **characterized in that** the liquid-conducting element (12b) has at least one recess (28b, 30b) for fastening a wiper blade adapter (32b).

8. Wiper blade with a wiper blade device according to one of the preceding claims.

9. Wiper blade according to Claim 8, **characterized by** at least one wiper blade adapter (32a; 32b) via which the liquid-conducting element (12a; 12b) extends in at least one wiper-blade longitudinal direction (34a, 36a; 34b, 36b) .

## Revendications

1. Dispositif de balai d'essuie-glace comprenant au moins une baguette flexible (10a ; 10b), un adaptateur de balai d'essuie-glace (32a) et au moins un élément de conduite de liquide (12a ; 12b), **caractérisé en ce que** l'élément de conduite de liquide (12a ; 12b) est configuré d'un seul tenant avec la baguette flexible (10a ; 10b) et conçu pour guider du liquide devant l'adaptateur de balai d'essuie-glace (32a).

2. Dispositif de balai d'essuie-glace selon la revendication 1, **caractérisé en ce que** l'élément de conduite de liquide (12a ; 12b) est façonné sur la baguette flexible (10a ; 10b).

3. Dispositif de balai d'essuie-glace selon la revendication 1 ou 2, **caractérisé en ce que** l'élément de conduite de liquide (12a ; 12b), observé au moins dans un état monté, est disposé sur un côté à l'opposé d'un côté d'écoulement principal de balai d'essuie-glace (14a ; 14b) .

4. Dispositif de balai d'essuie-glace selon l'une des revendications précédentes, **caractérisé en ce que** la baguette flexible (10a ; 10b) et l'élément de conduite de liquide (12a ; 12b), observés dans la direction d'au moins une normale (16a ; 16b) d'une surface principale (18a ; 18b) de la baguette flexible (10a ; 10b), présentent une épaisseur de matériau au moins sensiblement identique.

5. Dispositif de balai d'essuie-glace selon l'une des revendications précédentes, **caractérisé en ce que** la baguette flexible (10a ; 10b), dans une zone environnante de l'élément de conduite de liquide (12a ; 12b), possède au moins un creux (21a ; 21b) destiné à une réduction de la rigidité en flexion.

6. Dispositif de balai d'essuie-glace selon l'une des revendications précédentes, **caractérisé en ce que** l'élément de conduite de liquide (12a ; 12b) possède une première projection (24a ; 24b) faisant face à la baguette flexible (10a ; 10b), laquelle est plus grande qu'une deuxième projection (26a ; 26b) à l'opposé de la baguette flexible (10a ; 10b).

7. Dispositif de balai d'essuie-glace selon l'une des revendications précédentes, **caractérisé en ce que** l'élément de conduite de liquide (12b) possède au moins un creux (28b, 30b) servant à une fixation d'un adaptateur de balai d'essuie-glace (32b).

8. Balai d'essuie-glace comprenant un dispositif de balai d'essuie-glace selon l'une des revendications précédentes.

9. Balai d'essuie-glace selon la revendication 8, **caractérisé par** au moins un adaptateur de balai d'essuie-glace (32a ; 32b) par le biais duquel l'élément de conduite de liquide (12a ; 12b) s'étend dans au moins une direction longitudinale de balai d'essuie-glace (34a, 36a ; 34b, 36b).
